# FASCICULE DE BREVET EUROPEEN

(11) **EP 0 913 680 B1**
(45) Date de publication et mention de la délivrance du brevet: **07.08.2002**
(21) Numéro de dépôt: 98402442.2
(22) Date de dépôt: 05.10.1998
(51) Int. Cl.: G01N 1/00, G01N 35/10

(54) **Procédé et dispositif pour la distribution fractionnée d'un échantillon de sang**
Verfahren und Gerät zur schrittweisen Verteilung einer Blutprobe
Procedure and device for fractional distribution of a blood sample

(30) Priorité: 28.10.1997 FR 9713503
(43) Date de publication de la demande: 06.05.1999
(73) Titulaire: A B X, 34184 Montpellier Cedex 4 (FR)
(72) Inventeur: Le Comte, Roger, 34470 Perols (FR); Champseix, Henri, 34980 Montferrier sur Lez (FR)
(74) Mandataire: Bezault, Jean

(56) Documents cités:
- BE-A- 853 704
- FR-A- 2 192 708
- FR-A- 2 707 760
- US-A- 3 804 593
- US-A- 4 865 811
- PATENT ABSTRACTS OF JAPAN vol. 096, no. 004, 30 avril 1996 & JP 07 318566 A (HITACHI LTD), 8 décembre 1995

## Description

L'invention se rapporte au domaine de l'analyse hématologique et elle concerne plus particulièrement la distribution fractionnée d'un échantillon de sang.

Par l'expression "échantillon de sang", on entend désigner ici un volume de sang provenant d'une prise de sang chez un patient et contenu dans un récipient d'analyse, qui peut être par exemple un tube ouvert ou un tube fermé par un bouchon. Il s'agit généralement d'un sang total ou complet, prélevé sur anticoagulant.

En matière d'analyse hématologique, il est souvent nécessaire de disposer de plusieurs fractions du sang d'un patient, encore appelées "aliquotes", destinées à être diluées avec des réactifs différents pour procurer différents résultats d'analyse.

Ceci est le cas notamment des compteurs de globules qui effectuent la numération et la différenciation des globules blancs.

Pour des raisons pratiques, il est préférable de n'effectuer qu'un seul prélèvement d'échantillon dans un tube de sang du patient, puis de fractionner cet échantillon en différentes aliquotes qui seront ensuite mises chacune en présence d'un réactif approprié.

Le document FR2707760 qui est considéré l'état de la technique le plus proche décrit une aiguille déplaçable pour aspirer une quantité très précise de sang et la mélanger à une quantité dosée de diluant à l'intérieure de l'aiguille afin d'effectuer une dilution selon un taux connu.

Il est connu pour cela de fractionner l'échantillon de sang au moyen d'une vanne d'échantillonnage, comme enseigné par exemple par la publication FR 2 622 692 au nom de la Demanderesse.

Ces vannes d'échantillonnage ont l'avantage de fonctionner à des cadences élevées, ce qui les rend particulièrement intéressantes pour certains types d'analyseurs.

Mais, elles ont pour principaux inconvénients de nécessiter des volumes de sang bien supérieurs aux volumes théoriques nécessaires à l'analyse, de posséder une structure complexe et coûteuse, et de nécessiter en outre de fréquents nettoyages qui sont délicats à mettre en oeuvre.

Il est connu par ailleurs, dans le domaine de la biochimie, de prélever la totalité d'un sérum sanguin dans une aiguille et de repousser ensuite différents volumes successifs de ce prélèvement en vue de différentes dilutions.

Cette technique particulière s'applique à un sérum sanguin, c'est-à-dire à un sang débarrassé de ses globules et présentant, de ce fait, une viscosité plus faible que le sang total ou complet.

L'invention vise notamment à surmonter les inconvénients mentionnés ci-dessus et à permettre la distribution fractionnée d'un échantillon de sang dans des conditions d'efficacité élevées.

C'est en particulier un but de l'invention de procurer une distribution fractionnée avec des moyens simples et fiables et faciles d'entretien.

C'est encore un but de l'invention de permettre une telle distribution à partir d'un volume minimal d'échantillon de sang, sans risque de contamination des réactifs entre eux, et en assurant à chaque fois un bon mélange d'une aliquote de sang avec le réactif concerné.

L'invention propose à cet effet un procédé pour la distribution fractionnée d'un échantillon de sang, lequel comprend les opérations suivantes :
a) aspirer un échantillon de sang dans une aiguille ;
b) distribuer, par l'aiguille, une aliquote de sang, correspondant à une fraction donnée de l'échantillon aspiré, dans un flux de réactif pour produire un mélange de l'aliquote et du réactif ;
c) recueillir le mélange dans un réceptacle de mélange et/ou de mesure ; et
d) répéter au moins une fois les opérations b) et c) sur une autre aliquote du même échantillon et un autre flux de réactif.

Ainsi, le procédé de l'invention permet de fractionner un échantillon de sang contenu dans une aiguille en au moins deux aliquotes qui sont mélangées chacune par dilution avec un réactif approprié, et cela à chaque fois dans un réceptacle de mélange et/ou de mesure.

Il en résulte que chaque aliquote, qui correspond à une fraction donnée du prélèvement, est entraînée dans le flux de réactif, ce qui permet un mélange intime du sang et du réactif pour analyse.

Les aliquotes présentent des volumes choisis, pouvant être identiques ou différents, ce qui confère une grande souplesse d'utilisation au procédé de l'invention.

L'opération a) précitée comprend avantageusement l'aspiration de l'échantillon de sang dans l'aiguille qui contient déjà un liquide, une bulle de gaz, par exemple d'air, étant formée à l'interface entre le liquide et l'échantillon de sang.

De ce fait, il ne risque pas d'y avoir de mélange entre le l'échantillon de sang et le liquide, ce dernier servant simplement d'intermédiaire pour l'aspiration de l'échantillon et ensuite pour le refoulement progressif de cet échantillon en différentes aliquotes selon les analyses à effectuer.

Selon une autre caractéristique de l'invention, l'aspiration de l'échantillon de sang dans l'aiguille est effectuée à partir d'un tube de type ouvert ou fermé contenant un volume de sang à analyser.

De façon avantageuse, l'échantillon de sang aspiré dans l'aiguille présente un volume supérieur à la somme des volumes respectifs des aliquotes à distribuer, de manière à ménager éventuellement un excès de volume pour avoir un volume initial de sang dans l'aiguille à l'issue de l'opération (a) et/ou un volume résiduel de sang dans l'aiguille à l'issue de l'opération d), ce qui permet de préserver l'intégrité des aliquotes.

Le volume initial de sang peut être rejeté avant la distribution fractionnée.

Le volume résiduel de sang est le seul affecté en cas de présence résiduelle de liquide avant l'échantillonnage du sang. Ce volume résiduel peut être rejeté après la distribution, par exemple dans une cuve de rinçage, ce qui permet à l'aiguille de pouvoir être utilisée pour un nouveau prélèvement d'échantillon de sang.

Selon une autre caractéristique de l'invention, l'opération b) comprend l'injection de l'aliquote de sang et l'injection du flux de réactif dans des conditions contrôlées et de manière sensiblement simultanée, en sorte que le flux de réactif rencontre l'extrémité extérieure de l'aiguille.

Dans une forme de réalisation préférée de l'invention, cette opération b) comprend successivement :
b1) l'injection seule d'une partie initiale du flux de réactif ;
b2) l'injection simultanée de l'aliquote de sang et d'une partie intermédiaire du flux de réactif ; et
b3) l'injection seule d'une partie finale du flux de réactif.

Selon encore une autre caractéristique de l'invention, dans l'opération b), l'injection du flux de réactif est effectuée de telle sorte que ce flux rencontre l'extrémité extérieure de l'aiguille par laquelle est injectée l'aliquote de sang.

De préférence, l'injection de l'aliquote de sang est effectuée dans une direction sensiblement verticale descendante, tandis que l'injection du flux de réactif est effectuée dans une direction horizontale ou inclinée par rapport à l'horizontale, de manière à favoriser un mouvement tournant, ou tourbillon, permettant un mélange intime du sang et du réactif.

Le procédé de l'invention peut comprendre au moins une opération supplémentaire consistant à déposer une aliquote de sang dans un milieu liquide ou sur un support solide, par exemple sur une lame de verre.

Cela permet en ce cas de combiner des opérations de mélange d'aliquotes et de réactifs avec des opérations de nature différente.

Sous un autre aspect, l'invention concerne un dispositif pour la mise en oeuvre du procédé ci-dessus, lequel comprend :
- une aiguille propre à aspirer un échantillon de sang ;
- un premier distributeur volumétrique relié à l'aiguille pour aspirer et refouler des volumes choisis de sang ;
- au moins une buse d'injection de réactif propre à être située à proximité de l'extrémité de l'aiguille ;
- un second distributeur volumétrique relié à la buse pour refouler des volumes choisis d'un flux de réactif ;
- une unité de commande reliée au premier distributeur volumétrique et au(x) second(s) distributeur(s) volumétrique(s) pour les actionner de manière coordonnée ; et
- au moins un réceptacle de mélange et/ou de mesure pour recueillir le mélange formé à partir du sang et du réactif distribués respectivement par l'aiguille et la buse d'injection.

De façon préférentielle, la buse d'injection est orientée vers l'extrémité ouverte de l'aiguille par laquelle s'effectue le refoulement du sang.

Avantageusement, l'aiguille est sensiblement verticale avec son extrémité ouverte dirigée vers le bas, tandis que la buse d'injection s'étend dans une direction horizontale ou inclinée par rapport à l'horizontale.

La buse d'injection est avantageusement intégrée à un réceptacle de mélange et/ou de mesure.

Ce réceptacle peut être une cuve limitée par une paroi périphérique, la buse d'injection débouchant dans la cuve à proximité de la paroi périphérique.

En variante, le réceptacle est un raccord en T avec une première, une deuxième et une troisième branche, dans lequel l'extrémité libre de l'aiguille débouche dans la première branche, la deuxième branche sert de buse d'injection pour le réactif, et la troisième branche constitue une sortie pour le mélange.

Dans une forme de réalisation préférée de l'invention, le dispositif comprend des moyens moteurs propres à déplacer l'aiguille et l'amener successivement vers les réceptacles sous le contrôle de l'unité de commande.

Bien entendu, il pourrait être envisagé que l'aiguille soit fixe et que les réceptacles soient amenés successivement près de l'aiguille.

Le premier distributeur volumétrique et le(s) second(s) distributeur(s) volumétrique(s) comprennent avantageusement chacun au moins une seringue pilotée par un moteur, par exemple de type pas à pas.

Dans la description qui suit, faite à titre d'exemple, on se réfère aux dessins annexés sur lesquels :
- la figure 1 représente schématiquement un dispositif de distribution selon l'invention, dont on a représenté une seule cuve de mélange et/ou de mesure à des fins de simplification ;
- la figure 2 est un détail de la figure 1 montrant la cuve, l'aiguille et la buse d'injection ;
- la figure 3 est une vue en coupe transversale selon la ligne III-III de la figure 2 ;
- la figure 4 est une représentation schématique d'un dispositif selon l'invention comprenant une cuve de rinçage et trois cuves de mélange et/ou de mesure ;
- la figure 5 représente schématiquement le contenu d'une aiguille contenant un échantillon de sang, avant distribution et fractionnement de ce dernier ;
- la figure 6 est une représentation schématique d'une aiguille associée à un dispositif de nettoyage connu d'après la publication FR 2 707 760 ; et
- la figure 7 est une vue en coupe longitudinale d'un réceptacle réalisé sous la forme d'un raccord d'un T, ce raccord recevant une aiguille de prélèvement et une buse d'injection.

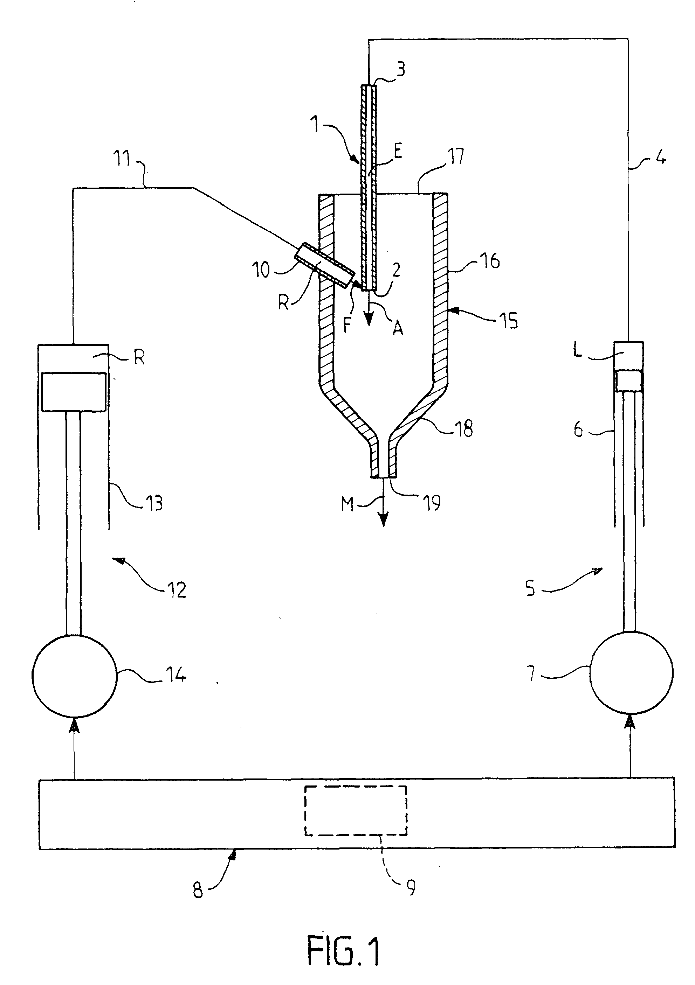

Le dispositif de la figure 1 comprend une aiguille 1 propre à contenir un échantillon de sang E, cette aiguille s'étendant dans une direction sensiblement verticale et possédant une extrémité inférieure 2 ouverte et une extrémité supérieure 3 reliée par un conduit 4 à un premier distributeur volumétrique 5 formé d'une seringue 6 actionnée par un moteur pas à pas 7. Une unité de commande 8 comprenant un microprocesseur 9 est prévue pour piloter le moteur pas à pas 7 et permettre ainsi à l'aiguille d'aspirer l'échantillon de sang E et de refouler ensuite des fractions ou aliquotes de cet échantillon dans des conditions contrôlées, comme on le verra plus loin.

Un liquide L remplissant la seringue 6, le conduit 4 et partiellement l'aiguille 1 sert d'intermédiaire pour commander les phases d'aspiration et de refoulement de l'aiguille 1.

L'unité de commande 8 est propre également à déplacer l'aiguille 1 par des moyens moteurs appropriés (non représentés).

Dans la position de la figure 1, l'aiguille 1 se trouve à proximité d'une buse d'injection 10 propre à envoyer un flux F d'un réactif R dans la direction de l'extrémité inférieure ouverte 2 de l'aiguille pour permettre un mélange intime d'une aliquote de sang A (refoulée par l'aiguille 1), et du flux F du réactif R.

La buse 10 est reliée par un conduit 11 à un deuxième distributeur volumétrique 12 comportant une seringue 13 actionnée par un moteur pas à pas 14, également sous le contrôle de l'unité de commande 8.

La buse d'injection 10 est portée par un réceptacle de mélange et/ou de mesure constitué ici d'une cuve 15 propre à recueillir le mélange formé à partir de l'aliquote de sang A et du flux F du réactif R.

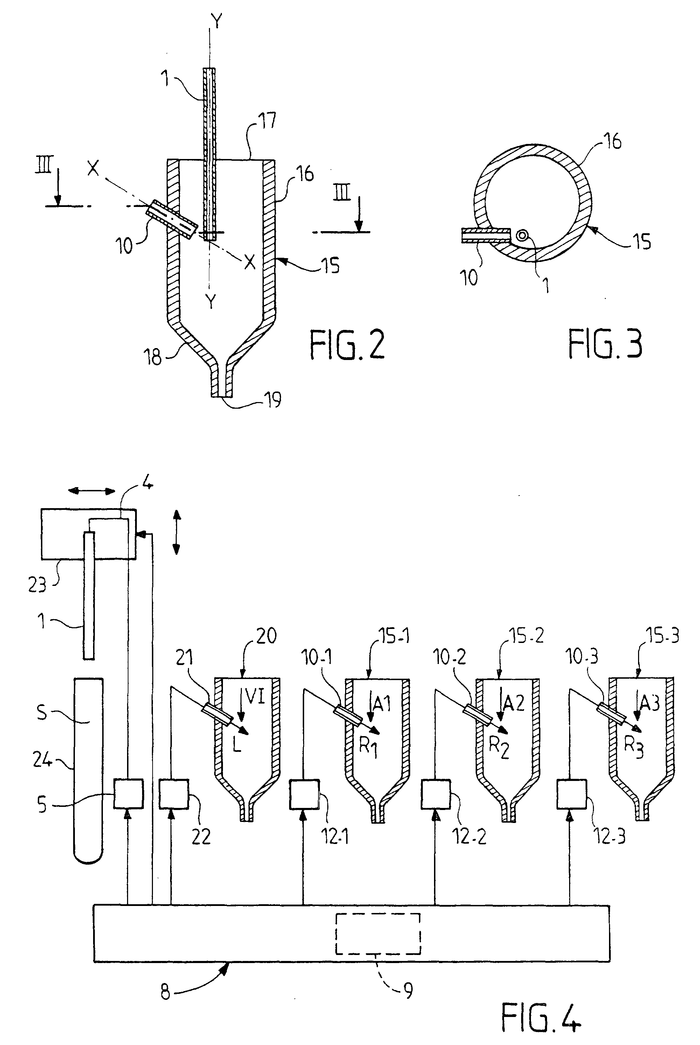

Comme on peut le voir plus particulièrement sur les figures 2 et 3, la cuve 15 est limitée principalement par une paroi périphérique 16 de forme générale cylindrique d'axe vertical. Cette paroi 16 présente une partie supérieure ouverte 17 et est prolongée en partie inférieure par une paroi tronconique 18 aboutissant à un conduit de sortie 19 pour l'évacuation du mélange M.

La buse d'injection 10 présente un axe XX (figure 2) qui est faiblement incliné sur l'horizontale et qui coupe l'axe YY de l'aiguille 1. Cette dernière est située près de la paroi 16 de la cuve 15 de manière que l'aliquote de sang A soit entraînée par le flux F de réactif en un point proche de la paroi 16, ce qui favorise un mélange intime du sang et du réactif par un mouvement tournant créant une sorte de tourbillon. Le mélange M ainsi créé est ensuite mesuré et/ ou évacué par le conduit de sortie 19 de la cuve 15.

On se réfère maintenant à la figure 4 représentant schématiquement un dispositif analogue à celui de la figure 1 et comprenant trois cuves de mélange et/ou d'analyse 15-1, 15-2 et 15-3 analogues à la cuve 15 décrite précédemment et portant respectivement trois buses d'injection 10-1, 10-2 et 10-3, analogues à la buse d'injection 10 décrite précédemment.

Ces buses d'injection sont reliées respectivement à trois distributeurs volumétriques 12-1, 12-2 et 12-3 (représentés schématiquement) analogues au distributeur volumétrique 12 décrit précédemment.

Les distributeurs 12-1, 12-2 et 12-3 sont propres à envoyer à chaque fois un volume donné de réactif dans la cuve correspondante. Les distributeurs volumétriques 12-1, 12-2 et 12-3 sont pilotés par l'unité de commande 8.

Dans la forme de réalisation de la figure 4, le dispositif comprend en outre une cuve de rinçage 20 à laquelle est associée une buse d'injection 21 reliée à un distributeur volumétrique 22 pour permettre la distribution d'un liquide de rinçage. Le distributeur volumétrique 22 est également piloté par l'unité de commande 8.

Cette dernière pilote en outre des moyens moteurs 23 propres à déplacer l'aiguille 1 et l'amener successivement vers la cuve de rinçage 20 et les cuves 15-1, 15-2 et 15-3 selon une séquence d'opérations programmée par le microprocesseur 9.

Ainsi, l'aiguille 1 peut être amenée dans un tube d'analyse 24 contenant du sang S d'un patient, ce tube étant réalisé ici sous la forme d'un tube ouvert.

Les moyens moteurs 23 sont propres à déplacer l'aiguille en translation verticale ou translation horizontale comme montré par les doubles flèches.

On décrira maintenant, à titre d'exemple, le fonctionnement du dispositif de la figure 4.

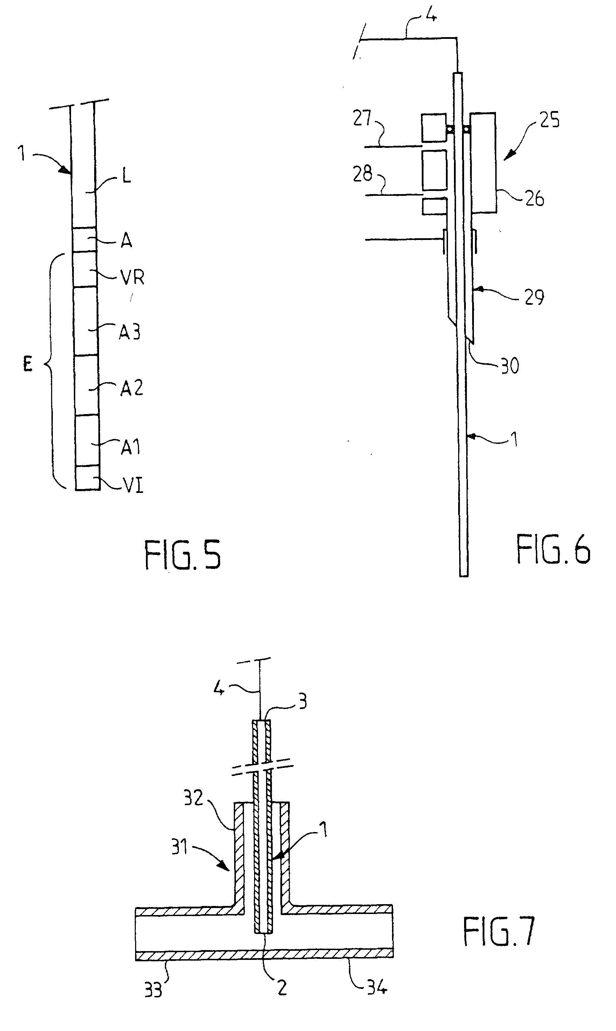

L'aiguille 1 est déplacée par les moyens moteurs 23, sous le contrôle de l'unité de commande 8, de manière à pénétrer à l'intérieur du tube d'analyse 24. Le distributeur volumétrique 5 est alors actionné par l'unité de commande 8 pour aspirer un volume déterminé de sang constituant un échantillon E. Cet échantillon E est contenu dans l'aiguille 1 et séparé du liquide L par une bulle d'air A (figure 5) formant interface et évitant ainsi le mélange entre le sang et le liquide. Ce dernier sert d'intermédiaire pour commander l'aspiration et le refoulement de l'aiguille 1.

Celle-ci est ensuite extraite du tube 24 puis déplacée pour venir en regard de la cuve de rinçage 20 et introduite dans cette dernière. Le distributeur volumétrique 5 est actionné par l'unité de commande 8 pour expulser un volume initial VI (voir figure 5). Ce volume initial est recueilli dans la cuve de rinçage et évacué grâce à un flux de liquide de rinçage L envoyé par la buse 21 sous l'action du distributeur volumétrique 22 piloté par l'unité de commande 8. Ensuite, l'aiguille 1 est extraite de la cuve de rinçage 20 puis déplacée en regard de la cuve de mélange et/ou d'analyse 15-1 et introduite dans cette dernière de manière que l'extrémité de l'aiguille vienne en regard de la buse d'injection 10-1. Le distributeur volumétrique 12-1 est alors actionné par l'unité de commande 8 pour refouler une fraction de l'échantillon E qui correspond à une première aliquote A1 (figure 5). Cette aliquote A1 est mélangée avec un flux d'un premier réactif R1 pour produire un mélange, lequel est mesuré et/ou recueilli à la sortie de la cuve 15-1.

Ensuite, l'aiguille 1 est extraite de la cuve 15-1 pour être amenée successivement vers les cuves 15-2 et 15-3 dans lesquelles sont refoulées respectivement des aliquotes A2 et A3 (figure 5). Ces aliquotes sont mélangées à des flux de réactif R2 et R3 pour produire des mélanges qui sont mesurés et/ou recueillis en sortie des cuves 15-2 et 15-3.

Après ces opérations, il reste dans l'aiguille un volume résiduel VR de sang (figure 5), qui se trouve toujours séparé du liquide L par la bulle d'air A. Ce volume résiduel VR doit être rejeté.

Pour cela, l'aiguille 1 est déplacée à nouveau vers la cuve de rinçage 20 et le volume résiduel VR est évacué par un flux du liquide de rinçage, lequel assure en même temps le nettoyage de l'extrémité inférieure 2 de l'aiguille 1 en vue d'opérations similaires sur un autre échantillon.

L'unité de commande 8 permet de piloter la séquence d'opérations de manière que l'aspiration de l'échantillon de sang puis sa distribution en aliquotes, issues du fractionnement de l'échantillon, se fassent dans des conditions contrôlées très précises.

Les différents distributeurs volumétriques sont actionnés chacun par des moteurs pas à pas qui permettent par conséquent de prélever par aspiration ou de distribuer par refoulement des volumes très précis de sang, de réactif ou de liquide de rinçage et cela avec des débits également précis.

Pour assurer un mélange intime d'une aliquote de sang et d'un flux de réactif dans une cuve de mélange, il est avantageux de réaliser d'abord une injection seule d'une partie initiale du flux de réactif, ensuite une injection simultanée de l'aliquote de sang et d'une partie intermédiaire du flux de réactif, et de terminer par une injection seule d'une partie finale du flux de réactif.

A titre d'exemple, les parties initiale, intermédiaire et finale du réactif peuvent correspondre respectivement à environ 10%, 80% et 10% du volume total du flux de réactif.

Bien entendu, les séquences d'opération décrites précédemment sont susceptibles de nombreuses variantes.

En particulier, il est possible d'effectuer deux opérations de mélange successives dans un même bac, d'intercaler une opération de rinçage entre deux mélanges avec des réactifs différents, etc.

Généralement, les opérations de mélange se font en partant du réactif le moins polluant ou contaminant, pour terminer par le réactif le plus polluant ou contaminant.

Dans le cas de la figure 6, l'aiguille 1 est associée à un dispositif de nettoyage 25 du type décrit dans la publication FR 2 707 760 au nom de la Demanderesse. Ce dispositif de nettoyage 25 comprend essentiellement un organe de guidage 26 disposant de conduits 27 et 28 de vidange et de rinçage. En outre, le dispositif 25 comprend une aiguille 29 de pré-perçage possédant une extrémité biseautée 30 propre à percer le bouchon (non représenté) d'un tube d'analyse.

Dans la forme de réalisation de la figure 7 à laquelle on se réfère maintenant, le réceptacle de mélange et/ou de mesure n'est plus constitué par une cuve mais par un raccord en T 31 possédant une première branche verticale 32 dans laquelle peut être introduite l'aiguille 1, une deuxième branche horizontale 33 dans laquelle le réactif est injecté et une troisième branche 34 opposée à la branche 33 et servant de sortie pour le mélange. La branche 33 est disposée de manière que le flux de réactif vienne rencontrer l'extrémité ouverte 2 de l'aiguille.

Bien entendu, l'invention n'est pas limitée aux formes de réalisation décrites précédemment et est susceptible de nombreuses variantes.

Le procédé et le dispositif de l'invention offrent une grande souplesse d'utilisation, notamment en ce qui concerne le nombre et le volume des aliquotes de sang à traiter.

## Revendications

1. Procédé pour la distribution fractionnée d'un échantillon de liquide, comprenant les opérations suivantes :
a) aspirer un échantillon de liquide (E) ;
b) mélanger une aliquote de liquide (A) avec un réactif (R) pour produire un mélange de l'aliquote et du réactif ;
c) recueillir le mélange dans un réceptacle de mélange et/ou de mesure (15 ; 31) ; et
d) répéter au moins une fois les opérations b) et c) sur une autre aliquote du même échantillon et un autre réactif,
dans lequel l'opération a) comprend l'aspiration l'un échantillon de sang (E) dans une aiguille (1) et l'opération b) comprend la distribution, par l'aiguille (1), d'une aliquote de sang (A), correspondant à une fraction donnée de l'échantillon aspiré, dans un flux (F) de réactif (R), **caractérisé en ce que** ledit flux de réactif rencontre l'extrémité extérieure de l'aiguille (1) par laquelle est injectée l'aliquote de sang (A), et **en ce que** l'opération d) comprend la répétition des opérations b) et c) sur une autre aliquote du mème échantillon et un autre flux de réactif.

2. Procédé selon la revendication 1, **caractérisé en ce que** les aliquotes (A1, A2, A3...) présentent des volumes choisis.

3. Procédé selon l'une des revendications 1 et 2, **caractérisé en ce que** l'opération a) comprend l'aspiration de l'échantillon de sang (E) dans l'aiguille (1) qui contient déjà un liquide (L), et **en ce qu'**une bulle de gaz (A) est formée à l'interface entre le liquide et l'échantillon de sang.

4. Procédé selon l'une des revendications 1 à 3, **caractérisé en ce que** l'aspiration de l'échantillon de sang (E) dans l'aiguille (1) est effectuée à partir d'un tube (24) de type ouvert ou fermé contenant un volume de sang à analyser.

5. Procédé selon l'une des revendications 1 à 4, **caractérisé en ce que** l'échantillon de sang (E) aspiré dans l'aiguille (1) présente un volume supérieur à la somme des volumes respectifs des aliquotes (A1, A2, A3...) à distribuer, de manière à ménager éventuellement un excès de volume pour avoir un volume initial (VI) de sang à l'issue de l'opération (a) et/ou un volume résiduel (VR) de sang dans l'aiguille à l'issue de l'opération d), ce qui permet de préserver l'intégrité des aliquotes (A1, A2, A3...).

6. Procédé selon l'une des revendications 1 à 5, **caractérisé en ce que** l'opération d) comprend l'injection de l'aliquote de sang (A) et l'injection du flux (F) de réactif (R) dans des conditions contrôlées et de manière sensiblement simultanée.

7. Procédé selon la revendication 6, **caractérisé en ce que** l'opération d) comprend successivement :
b1) l'injection seule d'une partie initiale du flux de réactif ;
b2) l'injection simultanée de l'aliquote de sang et d'une partie majeure du flux de réactif ; et
b3) l'injection seule d'une partie finale du flux de réactif.

8. Procédé selon l'une des revendications 1 à 7, **caractérisé en ce que** l'injection de l'aliquote de sang (A) est effectuée dans une direction sensiblement verticale descendante et que l'injection du flux de réactif (R) est effectuée dans une direction horizontale ou inclinée par rapport à l'horizontale.

9. Procédé selon l'une des revendications 1 à 8, **caractérisé en ce qu'**il comprend au moins une opération supplémentaire consistant à déposer une aliquote de sang (A) dans un milieu liquide ou sur un support solide.

10. Dispositif pour la distribution fractionnée d'un prélèvement de sang pour la mise en oeuvre du procédé selon l'une des revendications 1 à 9, comprenant :
- une aiguille (1) propre à aspirer un échantillon de sang (E) ;
- un premier distributeur volumétrique (5) relié à l'aiguille (1) pour aspirer et refouler des volumes choisis de sang ;
- une unité de commande (8) reliée au premier distributeur volumétrique (5) et au(x) second(s) distributeur(s) volumétrique(s) (12) pour les actionner de manière coordonnée ; et
- au moins un réceptacle de mélange et/ou de mesure (15 ; 31) pour recueillir le mélange formé à partir du sang et du réactif distribués respectivement par l'aiguille et la buse d'injection ;
**caractérisé en ce qu'**il comprend au moins une buse (10; 33) d'injection de réactif qui est orientée vers l'extrémité ouverte (2) de l'aiguille (1) par laquelle s'effectue le refoulement du sang, en sorte qu'un flux de réactif rencontre l'extrémité extérieure de l'aiguille, et un second distributeur volumétrique (12) relié à la buse d'injection pour refouler des volumes choisis d'un flux de réactif (R).

11. Dispositif selon la revendication 10, **caractérisé en ce que** la buse d'injection (10) est intégrée à un réceptacle de mélange et/ou de mesure (15 ; 31).

12. Dispositif selon la revendication 11, **caractérisé en ce que** le réceptacle (31) est un raccord en (T) avec une première, une deuxième et une troisième branche (32, 33, 34), **en ce que** l'extrémité libre de l'aiguille (1) débouche dans la première branche (32), **en ce que** la deuxième branche (33) sert de buse d'injection pour le réactif, et **en ce que** la troisième branche (34) constitue une sortie pour le mélange.

13. Dispositif selon l'une des revendications 10 à 12, **caractérisé en ce qu'**il comprend des moyens moteurs (23) propres à déplacer l'aiguille (1) et l'amener successivement vers les réceptacles (15 ; 31), sous le contrôle de l'unité de commande (8).

14. Dispositif selon l'une des revendications 10 à 13, **caractérisé en ce que** le premier distributeur volumétrique (5) et le(s) second(s) distributeur(s) volumétrique(s) (12) comprennent chacun au moins une seringue (6 ; 13) pilotée par un moteur (7 ; 14).

## Claims

1. Process for the fractionated distribution of a sample of liquid, comprising the following operations:
a) drawing in a sample of liquid (E);
b) mixing an aliquot of liquid (A) with a reagent (R) so as to produce a mixture of the aliquot and the reagent;
c) collecting the mixture in a mixing and/or measuring receptacle (15; 31); and
d) repeating operations b) and c) at least once on another aliquot of the same sample and another reagent,
in which operation a) comprises drawing a blood sample (E) into a needle (1) and operation b) comprises distributing, via the needle (1), an aliquot of blood (A), corresponding to a given fraction of the sample drawn in, into a stream (F) of reagent (R), **characterized in that** said stream of reagent encounters the outer end of the needle (1) via which the aliquot of blood (A) is injected, and **in that** operation d) comprises repeating operations b) and c) on another aliquot of the same sample and another stream of reagent.

2. Process according to Claim 1, **characterized in that** the aliquots (A1, A2, A3, etc.) have selected volumes.

3. Process according to either of Claims 1 and 2, **characterized in that** operation a) comprises drawing the blood sample (E) into the needle (1) which already contains a liquid (L), and **in that** a bubble of gas (A) is formed at the interface between the liquid and the blood sample.

4. Process according to one of Claims 1 to 3, **characterized in that** the blood sample (E) is drawn into the needle (1) from a tube (24) of the open or closed type, containing a volume of blood to be analysed.

5. Process according to one of Claims 1 to 4, **characterized in that** the blood sample (E) drawn into the needle (1) has a volume greater than the sum of the respective volumes of the aliquots (A1, A2, A3, etc.) to be distributed, in such a way as to optionally provide an excess volume so as to have an initial volume (VI) of blood at the end of operation a) and/or a residual volume (VR) of blood in the needle at the end of operation d), which makes it possible to preserve the integrity of the aliquots (A1, A2, A3, etc.).

6. Process according to one of Claims 1 to 5, **characterized in that** operation d) comprises injecting the aliquot of blood (A) and injecting the stream (F) of reagent (R) under controlled conditions and substantially simultaneously.

7. Process according to Claim 6, **characterized in that** operation d) comprises successively:
b1) injecting only an initial part of the stream of reagent;
b2) injecting simultaneously the aliquot of blood and a major part of the stream of reagent; and
b3) injecting only a final part of the stream of reagent.

8. Process according to one of Claims 1 to 7, **characterized in that** the injection of the aliquot of blood (A) is effected in a substantially vertical descending direction and **in that** the injection of the stream of reagent (R) is effected in a horizontal direction or in a direction which is at an angle relative to the horizontal.

9. Process according to one of Claims 1 to 8, **characterized in that** it comprises at least one additional operation consisting in depositing an aliquot of blood (A) into a liquid medium or onto a solid support.

10. Device for the fractionated distribution of a blood sample, for carrying out the process according to one of Claims 1 to 9, comprising:
- a needle (1) suitable for drawing in a blood sample (E);
- a first volumetric distributor (5) connected to the needle (1), for drawing in and discharging selected volumes of blood;
- a control unit (8) connected to the first volumetric distributor (5) and to the second volumetric distributor(s) (12), for actuating them in a coordinated manner; and
- at least one mixing and/or measuring receptacle (15; 31) for collecting the mixture formed from the blood and the reagent which are distributed, respectively, via the needle and the injection nozzle;
**characterized in that** it comprises at least one reagent injection nozzle (10; 33) which is directed towards the open end (2) of the needle (1) via which the discharging of the blood takes place, such that a stream of reagent encounters the outer end of the needle, and a second volumetric distributor (12) connected to the injection nozzle for discharging selected volumes of a stream of reagent (R).

11. Device according to Claim 10, **characterized in that** the injection nozzle (10) is integrated into a mixing and/or measuring receptacle (15; 31).

12. Device according to Claim 11, **characterized in that** the receptacle (31) is a (T)-union with a first, a second and a third branch (32, 33, 34), **in that** the free end of the needle (1) opens into the first branch (32), **in that** the second branch (33) is used as an injection nozzle for the reagent, and **in that** the third branch (34) constitutes an outlet for the mixture.

13. Device according to one of Claims 10 to 12, **characterized in that** it comprises drive means (23) suitable for moving the needle (1) and conveying it successively to the receptacles (15; 31), under the control of the control unit (8).

14. Device according to one of Claims 10 to 13, **characterized in that** the first volumetric distributor (5) and the second volumetric distributor(s) (12) each comprise at least one syringe (6; 13) driven by a motor (7; 14).

## Patentansprüche

1. Verfahren zur fraktionierten Verteilung einer Flüssigkeitsprobe, umfassend die folgenden Tätigkeiten:
a) Ansaugen einer Flüssigkeitsprobe (E);
b) Vermischen eines Flüssigkeitsaliquots (A) mit einem Reagens (R), um ein Gemisch aus dem Aliquot und dem Reagens herzustellen;
c) Auffangen des Gemischs in einem Misch- und/oder Messbehälter (15; 31); und
d) mindestens einmaliges Wiederholen der Tätigkeiten b) und c) an einem anderen Aliquot derselben Probe und einem anderen Reagens,
wobei die Tätigkeit a) umfasst, eine Blutprobe (E) in eine Nadel (1) einzusaugen, und wobei die Tätigkeit b) umfasst, mittels der Nadel (1) ein Blutaliquot (A), das einer bestimmten Fraktion der angesaugten Probe entspricht, in einem Fluss (F) des Reagens (R) zu verteilen,
**dadurch gekennzeichnet, dass** der Fluss des Reagens das äußere Ende der Nadel (1) trifft, durch welchen das Blutaliquot (A) eingespritzt wird, und dass die Tätigkeit d) die Wiederholung der Tätigkeiten b) und c) an einem anderen Aliquot derselben Probe und einem anderen Fluss des Reagens umfasst.

2. Verfahren nach Anspruch 1,
**dadurch gekennzeichnet, dass** die Aliquote (A1, A2, A3 ...) ausgewählte Volumina darstellen.

3. Verfahren nach einem der Ansprüche 1 oder 2,
**dadurch gekennzeichnet, dass** die Tätigkeit a) das Einsaugen der Blutprobe (E) in die Nadel (1) umfasst, die bereits eine Flüssigkeit (L) enthält, und dass eine Gasblase (A) an der Grenzfläche zwischen der Flüssigkeit und der Blutprobe ausgebildet wird.

4. Verfahren nach einem der Ansprüche 1 bis 3,
**dadurch gekennzeichnet, dass** das Einsaugen der Blutprobe (E) in die Nadel (1) aus einem offenen oder geschlossenen Reagenzglas stattfindet, das ein zu analysierendes Blutvolumen enthält.

5. Verfahren nach einem der Ansprüche 1 bis 4,
**dadurch gekennzeichnet, dass** die in die Nadel (1) eingesaugte Blutprobe (E) ein Volumen darstellt, das größer ist als die Summe der jeweiligen Volumina der zu verteilenden Aliquote (A1, A2, A3 ...), so dass gegebenenfalls ein überschüssiges Volumen zurückbehalten wird, um am Ende von Tätigkeit a) ein Ausgangsvolumen (VI) an Blut und/oder am Ende der Tätigkeit d) ein Restvolumen (VR) an Blut in der Nadel zu haben, wodurch es ermöglicht wird die Integrität der Aliquoten (A1, A2, A3 ...) zu bewahren.

6. Verfahren nach einem der Ansprüche 1 bis 5,
**dadurch gekennzeichnet, dass** die Tätigkeit d) das Einspritzen des Blutaliquots (A) und das Einspritzen des Flusses (F) des Reagens (R) unter kontrollierten Bedingungen und im wesentlichen gleichzeitig umfasst.

7. Verfahren nach Anspruch 6,
**dadurch gekennzeichnet, dass** die Tätigkeit d) nacheinander umfasst:
b1) nur einen anfänglichen Teil des Flusses des Reagens einzuspritzen;
b2) gleichzeitig das Blutaliquot und einen größeren Teil des Flusses des Reagens einzuspritzen; und
b3) nur einen abschließenden Teil des Flusses des Reagens einzuspritzen.

8. Verfahren nach einem der Ansprüche 1 bis 7,
**dadurch gekennzeichnet, dass** das Einspritzen der Blutaliquote (A) in einer Richtung stattfindet, die im wesentlichen vertikal absteigend ist, und dass das Einspritzen des Flusses des Reagens (R) in einer horizontalen oder zur Horizontalen geneigten Richtung stattfindet.

9. Verfahren nach einem der Ansprüche 1 bis 8,
**dadurch gekennzeichnet, dass** es mindestens eine zusätzliche Tätigkeit umfasst, die darin besteht, ein Blutaliquot (A) in einem flüssigen Medium oder auf einem festen Substrat aufzubewahren.

10. Vorrichtung zur fraktionierten Verteilung einer Entnahme von Blut zur Durchführung des Verfahrens nach einem der Ansprüche 1 bis 9, umfassend:
- eine Nadel (1), die sich dazu eignet, eine Blutprobe (E) anzusaugen;
- eine erste volumetrische Verteilereinrichtung (5), die mit der Nadel (1) verbunden ist, um ausgewählte Mengen an Blut anzusaugen und zurückzuhalten;
- eine Steuereinheit (8), die mit der ersten volumetrischen Verteilereinrichtung (5) und mit der/den zweiten volumetrischen Verteilereinrichtung/en (12) verbunden ist, um sie auf koordinierte Weise zu betätigen; und
- mindestens einen Misch- und/oder Messbehälter (15; 31), um das Gemisch aufzufangen, das sich aus dem Blut und dem Reagens gebildet hat, die jeweils durch die Nadel und den Einspritzkanal verteilt werden;
**dadurch gekennzeichnet, dass** sie mindestens einen Kanal (10; 33) zum Einspritzen des Reagens umfasst, der zum offenen Ende (2) der Nadel (1) gerichtet ist, durch das das Fördern des Blutes stattfindet, so dass ein Fluss Reagens auf das äußere Ende der Nadel trifft, und dass sie eine zweite volumetrische Verteilereinrichtung (12) umfasst, die mit dem Einspritzkanal verbunden ist, um ausgewählte Mengen eines Reagensflusses (R) zu fördern.

11. Vorrichtung nach Anspruch 10,
**dadurch gekennzeichnet, dass** der Einspritzkanal (10) in einen Misch- und/oder Messbehälter (15; 31) eingebaut ist.

12. Vorrichtung nach Anspruch 11,
**dadurch gekennzeichnet, dass** der Behälter (31) ein T-Anschluss mit einer ersten, zweiten und dritten Abzweigung (32, 33, 34) ist, dass das freie Ende der Nadel (1) in die erste Abzweigung (32) mündet, dass die zweite Abzweigung (33) als Einspritzkanal für das Reagens dient, und dass die dritte Abzweigung (34) einen Ausgang für das Gemisch darstellt.

13. Vorrichtung nach einem der Ansprüche 10 bis 12,
**dadurch gekennzeichnet, dass** sie Antriebseinrichtungen (23) umfasst, die sich dazu eignen, die Nadel (1) zu verschieben und sie nach und nach unter der Steuerung der Steuereinheit (8) zu den Behältern (15; 31) bringen.

14. Vorrichtung nach einem der Ansprüche 10 bis 13,
**dadurch gekennzeichnet, dass** die erste volumetrische Verteilereinrichtung (5) und die zweite/n volumetrische/n Verteilereinrichtung/en (12) jeweils mindestens eine Spritze (6; 13) umfassen, die durch einen Motor (7; 14) gesteuert wird.
